# EUROPEAN PATENT APPLICATION

(11) **EP 4 095 962 A1**
(43) Date of publication of application: **30.11.2022**
(21) Application number: 21175540.0
(22) Date of filing: 24.05.2021
(51) Int. Cl.: H01M 10/04, H01M 10/052, H01M 4/04, H01M 50/107, H01M 50/109, H01M 50/153, H01M 50/545, H01M 50/547, H01M 50/559

(54) **CLEAVAGE FLAKING TYPE LITHIUM ION BATTERY AND PREPARATION METHOD THEREOF**

(71) Applicant: Dongguan Huiyan Electronic Co., Ltd., Dongguan City, Guangdong Province (CN)
(72) Inventor: Duan, Xingyi, Dongguan City, Guangdong Province (CN)
(74) Representative: Sánchez Margareto, Carolina

(57) **Abstract**

The disclosure discloses a cleavage flaking type lithium ion battery and a preparation method thereof. The cleavage flaking type lithium ion battery includes a battery shell and a winding electric core; the winding electric core includes a battery pole piece which includes a coating region and a blank region adjacent to the coating region coated with an electrode material, and the blank region is directly connected with the battery shell or with a metal contact on the battery shell. The battery pole piece is directly connected with the battery shell, which omits the traditional process in which pole pieces need to be overlaid and welded with tabs, thereby effectively simplifying the process flow, improving the automation degree of production, avoiding a risk of short-circuit firing caused by a fact that a diaphragm is punctured when the tabs are wrapped in the pole pieces and improving the safety performance of the battery; in addition, no traditional tabs occupy the interior space of the battery, which significantly promotes the energy density of the battery in unit volume. The method for preparing a cleavage flaking type lithium ion battery provided by the disclosure is simple in process, easy to implement, high in production efficiency and improved in comprehensive competitive power of a product.

## Description

### TECHNICAL FIELD

The disclosure belongs to the technical field of lithium ion batteries, and particularly relates to a cleavage flaking type lithium ion battery and a preparation method thereof.

### BACKGROUND

The assembling methods of electric cores of common lithium ion batteries include a lamination type assembling method and a winding type assembling method. For them, it is generally necessary to overlay positive and negative tabs on pole pieces and weld them to the shell or connect positive and negative electrodes through a soft package encapsulation mode. This existing manner is time-wasting in the manufacturing process and low in production efficiency; and because the tab is made of a metal material, it easily punctures a diaphragm to cause short-circuit firing when being wrapped in the pole piece; in addition, the tab occupies a lot of effective spaces inside the shell, resulting in a loss of energy density per unit volume.

### SUMMARY

For the above defects, the objective of the disclosure is to provide a cleavage flaking type lithium ion battery which is ingenious and rational in structure design.

The disclosure also provides a method for preparing a cleavage flaking type lithium ion battery.

In order to realize the above objectives, the technical solution provided by the disclosure is as follows:
Provided is a method for preparing a cleavage flaking type lithium ion battery, comprising the following steps:
(1) preparing an electrode substrate, arranging a coating region and a blank region adjacent to the coating region on the electrode substrate;
(2) coating an electrode material to the coating region, and leaving a blank space in the blank region;
(3) cutting the electrode substrate completing step (2) into strips to obtain a battery pole piece; the battery pole piece comprising the coating region and the blank region which is protruded from one side of the coating region;
(4) after the battery pole piece is wound into a winding electric core, the blank region being located on the end surface of the winding electric core; and
(5) flattening the blank region and directly connecting the flattened black region with the battery shell or the metal contact arranged on the battery shell in advance.

As a preferred embodiment of the disclosure, in the step (3), strips are formed by laser cutting or die cutting.

As a preferred embodiment of the disclosure, in the step (5), the blank region is connected with the battery shell or the metal contact arranged the battery shell in advance through ultrasound or laser.

Provided is a cleavage flaking type lithium ion battery, comprising the battery shell and the winding electric core encapsulated in the battery shell, wherein the winding electric core comprises the battery pole piece comprising the coating region and the blank region adjacent to the coating region, the blank region is protruded from one side of the coating region, the coating region is coated with the electrode material, after the battery pole piece is wound into the winding electric core, the blank region is located on the end surface of the winding electric core, and the blank region is directly connected with the battery shell or the metal contact arranged on the battery shell in advance.

As a preferred embodiment of the disclosure, the whole shape profile of the battery pole piece is of an L shape.

As a preferred embodiment of the disclosure, the battery pole piece comprises a positive pole piece and a negative pole piece, and the blank regions of the positive pole piece and the negative pole piece are all located on one end surface of the winding electric core.

As a preferred embodiment of the disclosure, the battery pole piece comprises a positive pole piece and a negative pole piece, the blank regions of the positive pole piece are all located on one end surface of the winding electric core, and the blank regions of the negative pole piece are all located on the other end surface of the winding electric core. As a preferred embodiment of the disclosure, the quantity of the metal contacts is two, the two metal contacts are arranged on the battery shell side by side and mutually insulated.

As a preferred embodiment of the disclosure, the two surfaces of the battery pole piece are both coated with the coating regions. That is, the battery pole piece adopts dual-surface coating, which can even more promote energy density.

As a preferred embodiment of the disclosure, the cleavage flaking type lithium ion battery is a button type battery or cylindrical battery, and has a wide application range.

The disclosure has the beneficial effects: the cleavage flaking type lithium ion battery provided by the disclosure is ingenious and rational in structure design; the battery pole pieces are directly connected with the battery shell, which omits the traditional process in which pole pieces need to be overlaid and welded with tabs, thereby effectively simplifying the process flow, improving the automation degree of production, avoiding a risk of short-circuit firing caused by a fact that a diaphragm is punctured when the tabs are wrapped in the pole pieces and improving the safety performance of the battery; in addition, no traditional tabs occupy the interior space of the battery, which significantly promotes the energy density of the battery in unit volume. The method for preparing a cleavage flaking type lithium ion battery provided by the disclosure is simple in process, easy to implement, high in production efficiency and improved in comprehensive competitive power of a product.

Next, the disclosure will be further described in combination with drawings and examples.

### BRIEF DESCRIPTION OF THE DRAWINGS

Fig.1 is a preparation process flowchart of example 1 according to the disclosure.
Fig.2 is a structural diagram of example 1 according to the disclosure.
Fig.3 is a preparation process flowchart of example 2 according to the disclosure.
Fig.4 is a structural diagram of example 2 according to the disclosure.
Fig.5 is a preparation process flowchart of example 3 according to the disclosure.
Fig.6 is a structural diagram of example 3 according to the disclosure.

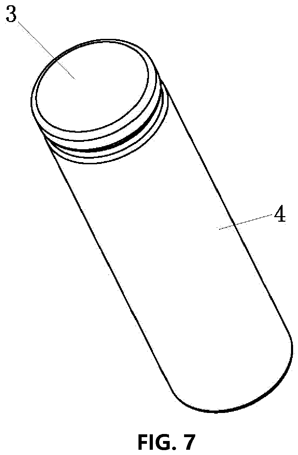

Fig.7 is a structural diagram of example 4 according to the disclosure.

### DESCRIPTION OF THE EMBODIMENTS

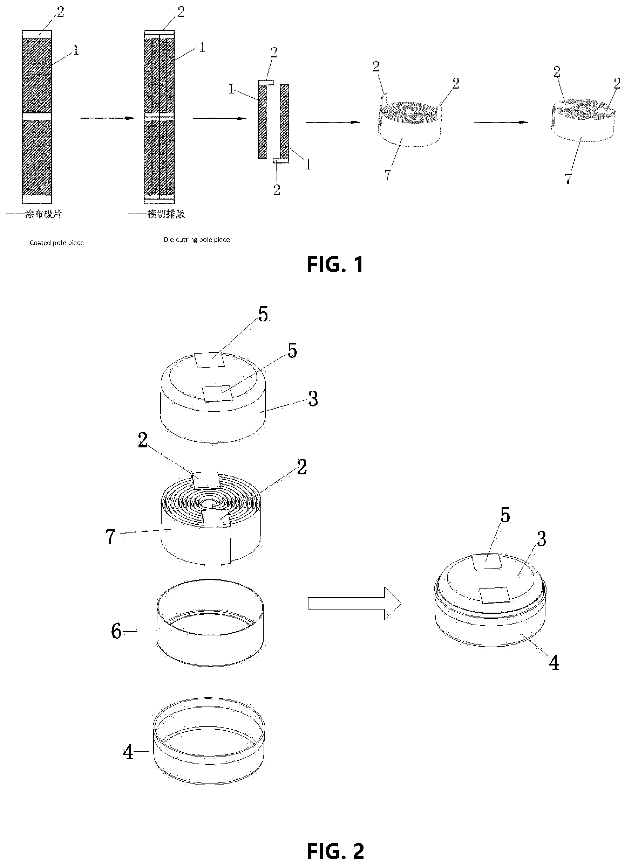

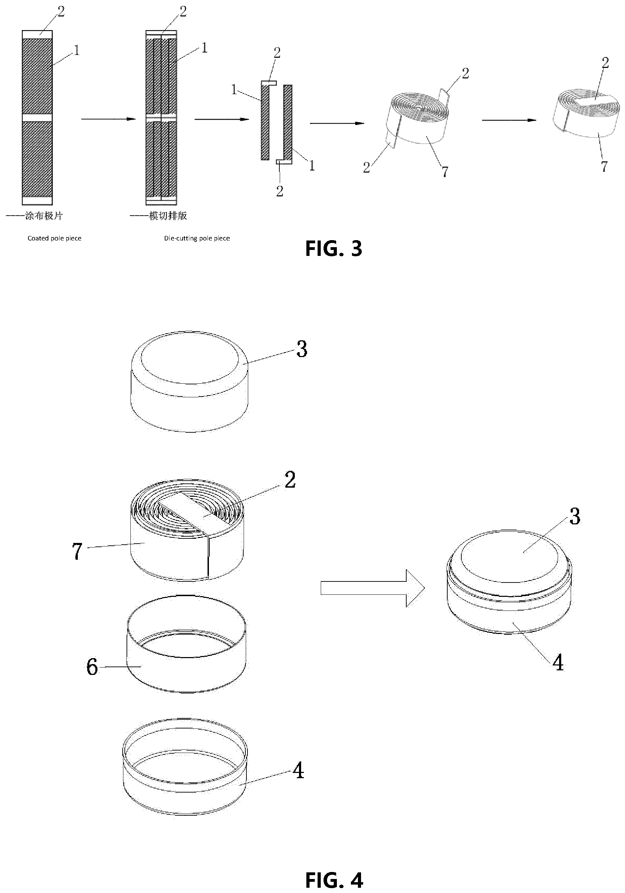

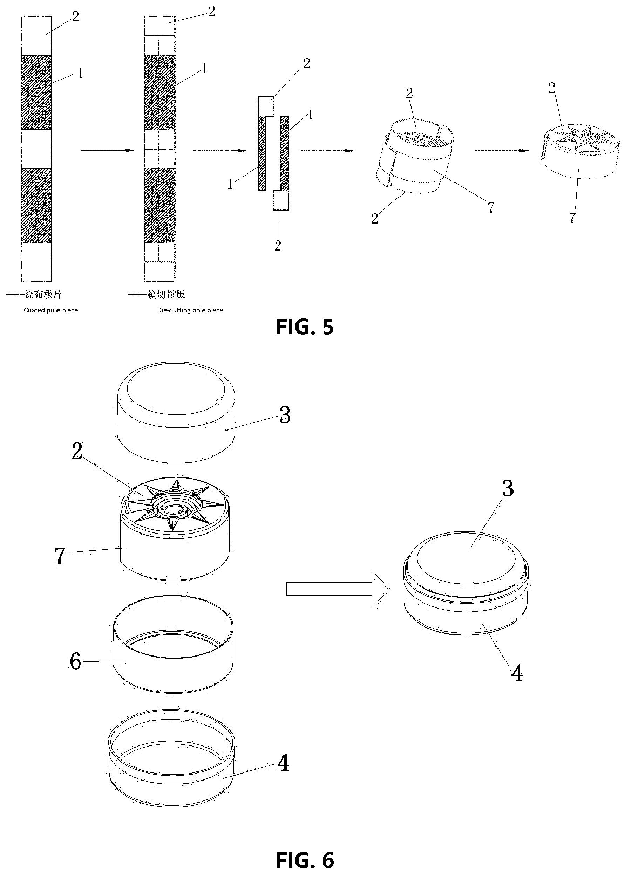

Example 1: referring to Fig.1 and Fig.2, this example provides a cleavage flaking type lithium ion battery and a preparation method thereof. The method comprises the following steps:
   (1) an electrode substrate was prepared, and a coating region 1 and a blank region 2 adjacent to the coating region 1 were arranged on the electrode substrate;
   (2) an electrode material was applied to the coating region 1, and a blank space was left in the blank region 2; if it was desired to prepare a positive pole piece, a positive electrode material was applied to the coating region 1; if it was desired to prepare a negative pole piece, a negative electrode material was applied to the coating region 1; preferably, the coating regions 1 were applied to the two surfaces of the battery pole piece. That is, the battery pole piece adopts the dual-surface coating, which can even more promote energy density;
   (3) the electrode substrate completing step (2) was cut into strips to obtain the battery pole piece; this battery pole piece included the coating region 1 and the blank region 2, and the blank region 2 was protruded from one side of the coating region 1, and the whole shape profile of the battery pole piece was of an L shape;
   (4) after the battery pole piece was wound into a winding electric core 7, the blank region 2 was located on the end surface of the winding electric core 7; in this example, the battery pole piece included a positive pole piece and a negative pole piece, and the blank regions 2 of the positive pole piece and the negative pole piece were all located on one end surface of the winding electric core 7;
   (5) the blank region 2 was flattened and directly connected with the metal contact arranged on the battery shell in advance. Specifically, the battery shell included an upper cover 3 and a lower cover 4 fit to the upper cover 3, the two metal contacts 5 were arranged on the upper cover 3 side by side, the two metal contacts 5 were mutually insulated but not in contact. Through a press machine, the upper cover 3 and the lower cover 4 were covered and sealed, and a middle insulated spacer bush 6 was arranged between the upper cover 3 and the lower cover 4 for isolation and insulation. At this moment, the blank regions 2 of the positive pole piece and the negative pole piece were correspondingly connected and conducted with the two metal contacts 5. The metal contacts 5 were correspondingly and effectively welded with the blank regions 2 of the positive pole piece and the negative pole piece on the surfaces or insides of the metal contacts 5 by using ultrasound or laser.
Example 2: referring to Fig.3-Fig.4, this example provides a cleavage flaking type lithium ion battery and a preparation method thereof. The method comprises the following steps:
   (1) an electrode substrate was prepared, and a coating region 1 and a blank region 2 adjacent to the coating region 1 were arranged on the electrode substrate;
   (2) an electrode material was applied to the coating region 1, and a blank space was left in the blank region 2; if it was desired to prepare a positive pole piece, a positive electrode material was applied to the coating region 1; if it was desired to prepare a negative pole piece, a negative electrode material was applied to the coating region 1; preferably, the coating regions 1 were applied to the two surfaces of the battery pole pieces. That is, the battery pole piece adopts dual-surface coating, which can even more promote energy density;
   (3) the electrode substrate completing in step (2) was cut into strips to obtain the battery pole piece; this battery pole piece included the coating region 1 and the blank region 2, and the blank region 2 was protruded from one side of the coating region 1, and the whole shape profile of the battery pole piece was of an L shape;
   (4) after the battery pole piece was wound into a winding electric core 7, the blank region 2 was located on the end surface of the winding electric core 7; in this example, the battery pole piece included a positive pole piece and a negative pole piece, the blank regions 2 of the positive pole piece located on one end surface of the winding electric core 7; the blank regions 2 of the negative pole piece located on the other end surface of the winding electric core 7;
   (5) the blank region 2 was flattened and directly connected with the battery shell. Specifically, the battery shell included an upper cover 3 and a lower cover 4 fit to the upper cover 3. Through a press machine, the upper cover 3 and the lower cover 4 were covered and sealed, and a middle insulated spacer bush 6 was arranged between the upper cover 3 and the lower cover 4 for isolation and insulation. At this moment, the blank regions 2 of the positive pole piece and the negative pole piece were correspondingly connected and conducted with the inner surfaces of the upper cover 3 and the lower cover 4. The upper cover 3 and the lower cover 4 were correspondingly and effectively welded with the blank regions 2 of the positive pole piece and the negative pole piece on the surfaces or insides of the upper cover 3 and the lower cover 4 by using ultrasound or laser.
Example 3: referring to Fig.4-Fig.5. this example provides a cleavage flaking type lithium ion battery and a preparation method thereof. The method comprises the following steps:
   (1) an electrode substrate was prepared, and a coating region 1 and a blank region 2 adjacent to the coating region 1 were arranged on the electrode substrate;
   (2) an electrode material was applied to the coating region 1, and a blank space was left in the blank region 2; if it was desired to prepare a positive pole piece, a positive electrode material was applied to the coating region 1; if it was desired to prepare a negative pole piece, a negative electrode material was applied to the coating region 1; preferably, the coating regions 1 were applied to the two surfaces of the battery pole piece. That is, the battery pole piece adopts dual-surface coating, which can even more promote energy density;
   (3) (3) the electrode substrate completing in step (2) was cut into strips to obtain the battery pole piece; this battery pole piece included the coating region 1 and the blank region 2, and the blank region 2 was protruded from one side of the coating region 1, and the whole shape profile of the battery pole piece was of an L shape;
   (4) after the battery pole piece was wound into a winding electric core 7, the blank region 2 was located on the end surface of the winding electric core 7; in this example, the battery pole piece included a positive pole piece and a negative pole piece, the blank regions 2 of the positive pole piece were all located on one surface of the winding electric core 7, and the blank regions 2 of the negative pole piece were all located on the other end surface of the winding electric core 7; the blank regions 2 of the positive pole piece and the negative pole piece were long in length, and surrounded around the circumferential direction of the winding electric core 7;
   (5) the blank region 2 was flattened and directly connected with the battery shell. Specifically, the battery shell included an upper cover 3 and a lower cover 4 fit to the upper cover 3. Through a press machine, the upper cover 3 and the lower cover 4 were covered and sealed, and a middle insulated spacer bush 6 was arranged between the upper cover 3 and the lower cover 4 for isolation and insulation. At this moment, the blank regions 2 of the positive pole piece and the negative pole piece were correspondingly connected and conducted with the inner surfaces of the upper cover 3 and the lower cover 4. The upper cover 3 and the lower cover 4 were correspondingly effectively welded with the blank regions 2 of the positive pole piece and the negative pole piece on the surfaces or insides of the upper cover 3 and the lower cover 4 by using ultrasound or laser.
Example 4: referring to Fig.6, this example provides a cleavage flaking type lithium ion battery and a preparation method thereof, which are basically consistent with those in example 2 or example 3, the difference is that the whole battery has high height and a cylindrical shape, and is a cylindrical battery. And the batteries in example 2 and example 3 are button type batteries. When in production, it is only needed to correspondingly heighten the height of the winding electric core 7 in example 2 or example 3.

The above examples 1-4 are only preferred embodiments of the disclosure, and all of the embodiments cannot be listed in the disclosure one by one. Equivalent variations made using any technical solution in one of the above examples or according to the above examples, for example the battery shell can be of regular or irregular shapes such as triangles, ellipses and hexagons, are all included within the protective scope of the disclosure.

According to the revelation and teaching of the above specification, those skilled in the art can also make change and amendments to the above embodiments. Thus, the disclosure is not limited to specific embodiments disclosed and described above, some amendments and changes are also included within the protective scope of claims of the disclosure. In addition, although some specific terms are used in the specification, these terms are only for convenience of description but not limiting the disclosure. As described in the above examples of the disclosure, other batteries and preparation methods obtained by using the same or similar structure all fall within the protective scope of the disclosure.

## Claims

1. A method for preparing a cleavage flaking type lithium ion battery, comprising the following steps:
(1) preparing an electrode substrate, arranging a coating region and a blank region adjacent to the coating region on the electrode substrate;
(2) applying an electrode material to the coating region, and leaving a blank space in the blank region;
(3) cutting the electrode substrate completing step (2) into strips to obtain a battery pole piece; the battery pole piece includes the coating region and the blank region which is protruded from one side of the coating region;
(4) after the battery pole piece is wound into a winding electric core, the blank region being located on the end surface of the winding electric core; and
(5) flattening the blank region and allowing the flattened black region to be directly connected with the battery shell or the metal contact arranged on the battery shell in advance.

2. The method for preparing a cleavage flaking type lithium ion battery according to claim 1, wherein in the step (3), strips are formed by laser cutting or die cutting.

3. The method for preparing a cleavage flaking type lithium ion battery according to claim 1, wherein in the step (5), the blank region is connected with the battery shell or the metal contact arranged on the battery shell in advance through ultrasound or laser.

4. A cleavage flaking type lithium ion battery, comprising the battery shell and the winding electric core encapsulated in the battery shell, wherein the winding electric core comprises the battery pole piece comprising the coating region and the blank region adjacent to the coating region, the blank region is protruded from one side of the coating region, the coating region is coated with the electrode material, after the battery pole piece is wound into the winding electric core, the blank region is located on the end surface of the winding electric core, and the blank region is directly connected with the battery shell or the metal contact arranged on the battery shell in advance.

5. The cleavage flaking type lithium ion battery according to claim 4, wherein the whole shape profile of the battery pole piece is of an L shape.

6. The cleavage flaking type lithium ion battery according to claim 4, wherein the battery pole piece comprises a positive pole piece and a negative pole piece, and the blank regions of the positive pole piece and the negative pole piece are all located on one end surface of the winding electric core.

7. The cleavage flaking type lithium ion battery according to claim 4, wherein the battery pole piece comprises a positive pole piece and a negative pole piece, the blank regions of the positive pole piece are all located on one end surface of the winding electric core, and the blank regions of the negative pole piece are all located on the other end surface of the winding electric core.

8. The cleavage flaking type lithium ion battery according to claim 4, wherein the quantity of the metal contacts is two, and the two metal contacts are arranged on the battery shell side by side and mutually insulated.

9. The cleavage flaking type lithium ion battery according to claim 4, wherein the two surfaces of the battery pole piece are both provided with the coating regions.

10. The cleavage flaking type lithium ion battery according to any one of claims 4-9, wherein the cleavage flaking type lithium ion battery is a button type battery or cylindrical battery.
